# EUROPEAN PATENT SPECIFICATION

(11) **EP 4 348 332 B1**
(45) Date of publication and mention of the grant of the patent: **21.10.2026**
(21) Application number: 22728709.1
(22) Date of filing: 06.05.2022
(51) Int. Cl.: G02B 27/00, G02B 27/01, H04N 13/246, H04N 13/344, H04N 13/38

(54) **CALIBRATING SENSOR ALIGNMENT WITH APPLIED BENDING MOMENT**
KALIBRIERUNG DER SENSORAUSRICHTUNG MIT ANGEWANDTEM BIEGEMOMENT
ÉTALONNAGE D'ALIGNEMENT DE CAPTEUR AVEC UN MOMENT DE FLEXION APPLIQUÉ

(30) Priority: 01.06.2021 US 202117336119
(43) Date of publication of application: 10.04.2024
(73) Proprietor: Microsoft Technology Licensing, LLC, Redmond, WA 98052-6399 (US)
(72) Inventor: WU, Yinan, Redmond, Washington 98052-6399 (US); POULAD, Navid, Redmond, Washington 98052-6399 (US); LIU, Dapeng, Redmond, Washington 98052-6399 (US); BOSWELL, Trevor Grant, Redmond, Washington 98052-6399 (US); DEMASTER-SMITH, Rayna, Redmond, Washington 98052-6399 (US); RICCOMINI, Roy Joseph, Redmond, Washington 98052-6399 (US); SAMPLES, Michael Edward, Redmond, Washington 98052-6399 (US); CHEONG, Yuenkeen, Redmond, Washington 98052-6399 (US)
(74) Representative: Goddar, Heinz J.
(86) International application number: PCT/US2022/027965
(87) International publication number: WO 2022/256127

(56) References cited:
- WO-A1-2020/131277
- WO-A1-2020/132243
- WO-A1-2020/263498
- WO-A1-2022/066989
- WO-A1-2022/066989
- WO-A1-2022/072262

## Description

### BACKGROUND

Wearable display devices, such as augmented reality display devices, may render virtual content (e.g. holograms) over a view of a real-world background. By presenting separate left-eye and right-eye images from different perspectives, mixed reality imagery, in which displayed virtual objects appear to interact with physical objects in the real-world background, may be presented.

WO2020/132243 A1 describes a wearable display system with a limited number of cameras. Two cameras can be arranged to provide an overlapping central view field and a peripheral view field associated with one of the two cameras. A third camera can be arranged to provide a color view field overlapping the central view field. The wearable display system may be coupled to a processor configured to generate a world model and track hand motion in the central view field using two cameras. The processor may be configured to perform a calibration routing to compensate for distortions during use of the wearable display system. The processor may be configured to identify and address portions of the world model including incomplete depth information by obtaining additional depth information, such as by enabling emitters, detecting planar surfaces in the physical world, or identifying relevant object templates in the world model.

WO2020/263498 A1 describes a three-dimensional image calibration and presentation for stereoscopic imaging systems such as eyewear including a first camera and a second camera. The calibration and presentation include obtaining a calibration offset using vanishing points obtained from images captured by a first camera and a second camera to accommodate rotation of the first and second cameras with respect to one another, adjusting a three-dimensional rendering offset by the obtained calibration offset, and presenting the stereoscopic images using the three dimension rendering offset.

WO2020/131277 A1 describes three-dimensional image calibration and presentation for eyewear including a pair of image capture devices. Calibration and presentation include obtaining a calibration offset to accommodate flexure in the support structure for the eyewear, adjusting a three dimensional rendering offset by the obtained calibration offset, and presenting the stereoscopic images using the three dimension rendering offset.

WO 2022/066989 A1 describes eyewear including a sensor integrated into frame of eyewear. In one example, the sensor comprises a strain gauge, such as a metallic foil gauge, that is configured to sense and measure distortion of the frame when worn by a user and under different force profiles, by measuring a strain in the frame when bent. The measured strain by strain gauge is sensed by a processor, and the processor performs dynamic calibration of image processing based on the measured strain. The distortion measured by the strain gauge is used by the processor to correct calibration of the cameras, and the displays.

The invention is set forth in the independent claims. Embodiments of the invention are described in the dependent claims.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

Examples are disclosed that relate to calibrating an alignment of sensors on a wearable display device. One example provides a wearable display device comprising a frame, a first sensor and a second sensor spatially distributed on the frame, one or more displays supported by the frame, a logic system, and a storage system. The storage system comprises calibration data related to a determined alignment of the first sensor and the second sensor with the frame in a bent configuration. The storage system further comprises instructions executable by the logic system to obtain first sensor data from the first sensor and obtain second sensor data from the second sensor, determine a distance from the wearable display device to a feature based at least upon the first sensor data and the second sensor data using the calibration data, obtain a stereo image to display based upon the distance from the wearable display device to the feature, and output the stereo image via the one or more displays.

### BRIEF DESCRIPTION OF THE DRAWINGS

FIG. 1 shows an example wearable display device.
FIG. 2 shows a block diagram of an example wearable display device.
FIG. 3 illustrates an example range of human head widths.
FIG. 4A shows an example wearable display device frame in an unbent configuration.
FIG. 4B shows the example wearable display device frame in a bent configuration illustrative of the device state when worn.
FIG. 5 shows a graph representing an example of pointing error as a function of bending moment for an example wearable display device.
FIG. 6 shows a graph representing an example of bending moment as a function of user head width for an example wearable display device.
FIG. 7 shows a flow diagram of an example method for calibrating a wearable display device with an applied bending moment.
FIG. 8A and FIG. 8B show a flow diagram of an example method for displaying a hologram using calibration data related to a sensor alignment determined with an applied bending moment.
FIG. 9 shows a block diagram of an example computing system.

### DETAILED DESCRIPTION

Wearable display devices that display virtual holographic content may use sensor data to track a location of the device in an environment. As an example, a head-mounted display device (HMD) may utilize one or more sensors, such as image sensors and/or inertial motion sensors, to track head motion. Direct measurement depth sensors, such as time of flight (ToF) or structured light depth sensors, may be used on some devices for head tracking. However, such direct measurement sensors may be too large to fit onto smaller form-factor wearable devices, such as devices having a form factor of a pair of glasses. Some smaller form-factor HMDs may thus utilize a stereo camera system for head tracking and distance determination. A stereo camera system captures images using two (or more) cameras positioned in a spatially separated arrangement on the device to determine distances to objects in the real-world environment using triangulation.

Head tracking data determined from such sensors, such as distances determined by head tracking stereo cameras, can be used to display stereo images that can appear as holograms. This allows the display of mixed reality images, in which virtual images presented as holograms appear to coexist and interact with physical real-world objects and environment. However, any errors in determining the distances via sensor data from the sensors can impact a user experience, such as by leading to an inaccurate rendering or display of the hologram. As a result, a hologram may appear to be displayed at an incorrect or unstable location, and/or at an incorrect scale. As examples, an incorrectly located hologram may overlap or float above a real-world object upon which the hologram is meant to appear as being placed, while an unstable hologram may appear to skip around in location as a user moves within the environment. Thus, the inaccurate determination of distance can impact a mixed reality experience.

As a stereo imaging system determines distance values using a plurality of cameras arranged at different spatial locations, errors can arise if the cameras are misaligned relative to one another compared to an expected alignment. To avoid such errors, a stereo camera system may be calibrated during a manufacturing process to calibrate an alignment of the cameras. The determined calibration can be stored on the device and then used in the computation of the distance values from the image data acquired by the cameras.

However, smaller form factor wearable display devices, such as a glasses-like device, may bend when worn, which can impact an alignment of calibrated sensors on the device. For example, a device with a glasses-like form factor may be designed to be somewhat smaller than an intended head size range so that temple pieces of the device exert pressure against the head of the user. However, the pressure against the head may result in a bending moment exerted against a frame of the device, causing the frame to bend. This bending can cause a misalignment of sensors positioned on the frame, leading to errors in distance determinations that can impact hologram display.

Accordingly, examples are disclosed that relate to calibrating an alignment of a first sensor and a second sensor on a wearable display device by performing the calibration with a frame of the device in a bent configuration that is representative of the device is worn by a user having a head width within an intended range of head widths. Information regarding the determined alignment of the first sensor and the second sensor while the frame is in the bent configuration is stored as calibration data. When the wearable display device tracks a location of the device in an environment, the first sensor obtains first sensor data and the second sensor obtains second sensor data. From the first sensor data and the second sensor data, the device determines a distance from the wearable display device to a feature captured using the sensor data and the calibration data, and obtains a stereo image (comprising left and right eye images at different perspectives) for display based upon the distance determined.

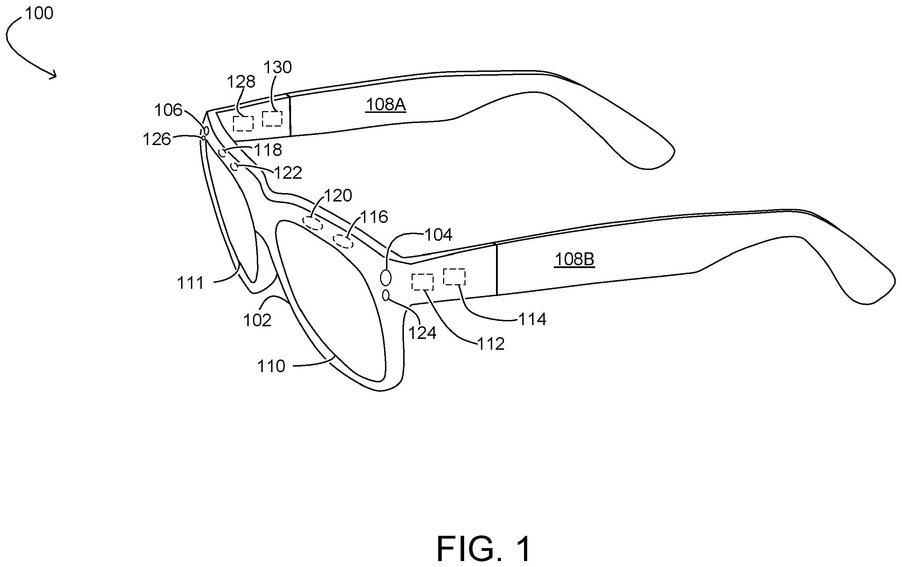

FIG. 1 schematically shows an example wearable display device 100 comprising a frame 102, a first camera 104, a second camera 106, a display, and temple pieces 108. In this example, the display comprises a first display 110 and a second display 111 supported by the frame 102, wherein each of the first display 110 and the second display 111 takes the form of a waveguide configured to deliver a projected image to a respective eye of a user. The first camera 104 and the second camera 106 in this example comprise head tracking cameras located respectively at left and right sides of the frame 102, wherein each of the first camera and the second camera is located on the frame adjacent to an outer edge of the frame. A wearable display device may further comprise other sensors that include aligned left and right components. For example, wearable display device 100 includes an eye tracking system comprising a first eye tracking camera 116 and a second eye tracking camera 118, a face tracking system comprising a first face tracking camera 120 and a second face tracking camera 122, and a hand tracking system comprising a first hand tracking camera 124 and a second hand tracking camera 126. Data from the eye tracking system, the face tracking system, and/or the hand tracking system may be used to detect user inputs, and also may be used to help render the stereo image in various examples.

Wearable display device 100 further comprises a first display module 112 positioned adjacent to the first camera 104 for displaying a first image of the stereo image and a second display module 128 positioned adjacent to the second camera 106 for displaying a second image of the stereo image. Each display module may comprise any suitable display technology, such as a scanned beam projector, a microLED (light emitting diode) panel, a microOLED (organic light emitting diode) panel, or a LCoS (liquid crystal on silicon) panel, as examples. Further, various optics, such as the above-mentioned waveguides, one or more lenses, prisms, and/or other optical elements may be used to deliver displayed images to a user's eyes.

In addition to cameras, a wearable display device further may include other types of sensors sensitive to misalignment due to bending. For example, wearable display device 100 comprises an inertial measurement unit system (IMU) comprising a first IMU 114 positioned adjacent to the first display module 112 and a second IMU 130 positioned adjacent to the second display module 128. First camera 104, first display module 112, and first IMU 114 may be closely mechanically coupled to help prevent changes in alignment from occurring between the first camera 104, the first display module 112, and the first IMU 114. Second camera 106, second display module 128, and second IMU 130 may be similarly closely mechanically coupled. IMU data can be used to adjust a displayed image based upon head motion. IMUs 114 and 130 also can be calibrated with a bending moment applied to the wearable display device 100.

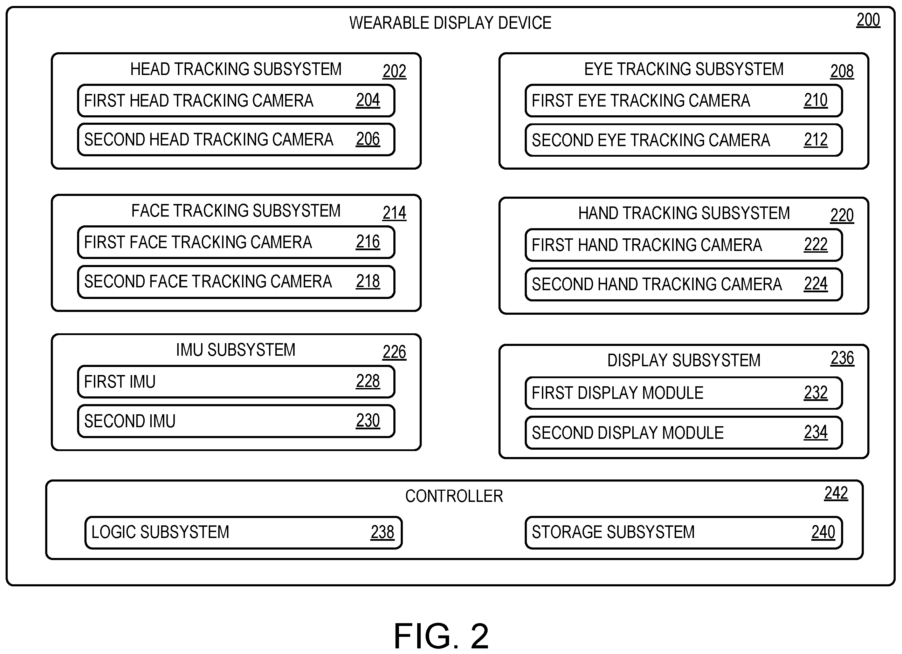

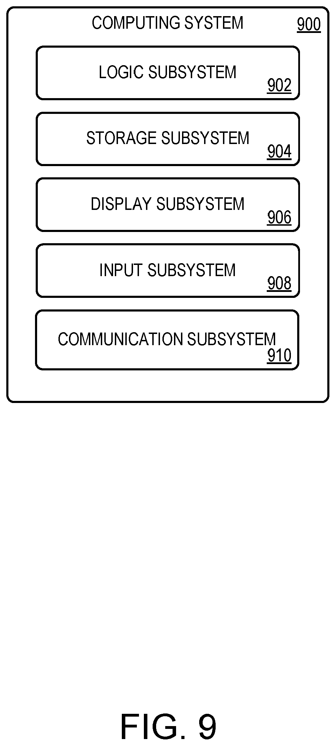

FIG. 2 shows a block diagram of an example wearable display device 200. Wearable display device 100 of FIG. 1 is an example of display device 200 of FIG. 2. Wearable display device 200 comprises a head tracking subsystem 202 comprising a first head tracking camera 204 and a second head tracking camera 206, a display subsystem 236, and a controller 242 comprising a logic subsystem 238 and a storage subsystem 240, examples of which are discussed in more detail in FIG. 9. The display subsystem 236 in the depicted example comprises a first display module 232 and a second display module 234, wherein the first display module is configured to display an image for delivery to a first eye of a user and the second display module is configured to display an image for delivery to a second eye of a user as part of a stereo image. In other examples, a display subsystem may have a single display configured to display images to both eyes.

As mentioned above, a displayed stereo image can be rendered based upon head tracking data captured by the head tracking subsystem 202. The head tracking data can be used to determine a location of the device in an environment and a distance from the device to objects in the environment. This data can then be used to determine left-eye and right-eye images to display that place the hologram in an intended position (e.g. on top of a table or on a wall). An optional inertial measurement unit (IMU) subsystem 226 comprising a first IMU 228 and a second IMU 230 may be used in combination with the head tracking subsystem 202 to help determine the location of the device in the environment, such as by tracking head movement. Other sensor data that may be used to render the stereo image data include eye tracking data from an optional eye tracking system 208 comprising a first eye tracking camera 210 and a second eye tracking camera 212, face tracking data from an optional face tracking subsystem 214 comprising a first face tracking camera 216 and a second face tracking camera 218, and hand tracking data from an optional hand tracking subsystem 220 comprising a first hand tracking camera 222 and a second hand tracking camera 224. Eye tracking data from the eye tracking subsystem 208 may be used to determine a gaze direction, which can be used to place a hologram in an environment and/or for detecting eye gesture inputs for interacting with the hologram. Face tracking data from the face tracking subsystem 214 and hand tracking data from the hand tracking subsystem 220 may be used as face gesture inputs and hand gesture inputs, respectively, to interact with the hologram. Misalignment of any of the eye tracking cameras, the face tracking cameras, or the hand tracking cameras may result in inaccurate hologram placement and/or inaccurate or mistaken input gestures.

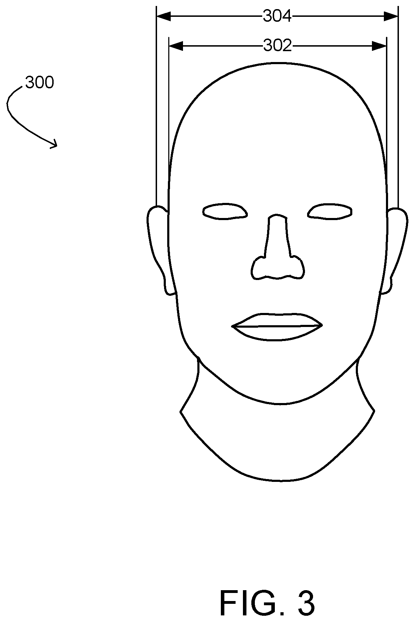

As mentioned above, a wearable display device with a glasses form factor may be designed to be somewhat smaller than an intended head size range so that temple pieces of the device exert pressure against the head of the user, causing the frame to bend. The bending may be different for different users, as a wearable display device may be used by a population of users with a distribution of different head widths. FIG. 3 illustrates a human head, 300, and qualitatively shows a range of head widths extending between a minimum head width 302 to a maximum head width 304 of an intended range of head widths for a wearable device. To help ensure that a wearable display device securely fits even the smallest head widths in the intended range of head widths, the wearable display device may be designed such that the temple pieces exert pressure against heads of a smallest size within the intended range. As such, a frame of the device may bend somewhat for users with the smallest head widths in the intended range, and more for users with larger head widths.

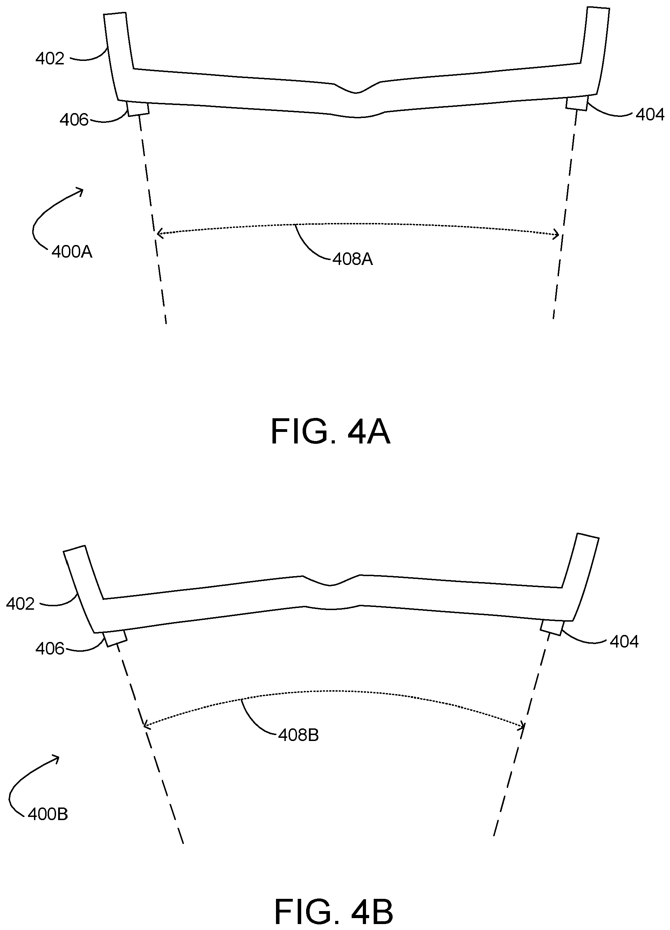

FIG. 4A shows at 400A an example wearable display device frame 402 in an unbent configuration with no applied bending moment, such as in the as-built state of the wearable display device. In contrast, FIG. 4B shows, at 400B, the frame 402 in a bent configuration such as under a bending moment illustrative of the device being worn by a user. An alignment between a first camera 404 and a second camera 406 of a head tracking system is represented by arc 408A. Bending of the frame 402 that occurs when the wearable display device is worn by the user changes an alignment of the first and second cameras, as indicated by the greater curvature of arc 408B compared to arc 408A. Where the alignment of the first camera 404 and the second camera 406 is calibrated in the device state shown at 400A, the bend shown at arc 408B can induce pointing errors, wherein the term "pointing error" indicates an error in the alignment of a sensor (e.g. a camera, IMU, and/or other calibrated sensor) compared to a calibrated alignment. A pointing error above a threshold value may visibly impact a displayed hologram.

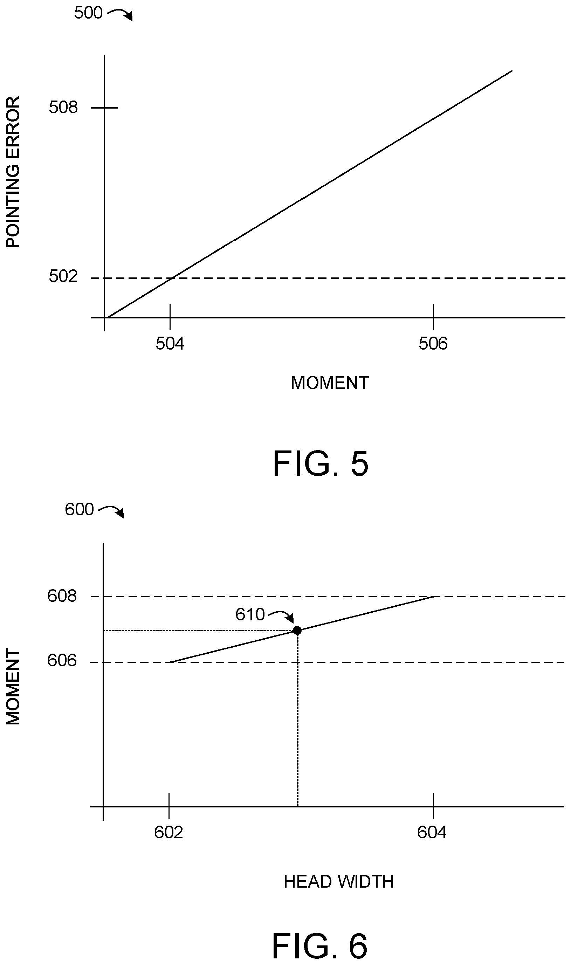

FIG. 5 shows a graph 500 that qualitatively illustrates an example linear relationship between pointing error and bending moment applied to an example wearable display device. A pointing error over a threshold value 502 may impact a user experience, as displayed holograms may appear misplaced. However, a bending moment that gives rise to a pointing error over the threshold may be met by a substantial portion of a range of intended head sizes where the camera alignment is calibrated in an unbent configuration such as with no bending moment applied.

FIG. 6 shows a graph 600 qualitatively representing an example linear relationship between bending moment and user head width for a wearable display device such as those described herein. As mentioned above, a wearable display device may be designed to accommodate a selected range of head widths. An example of such a range is shown by locations 602 and 604 in FIG. 6. The vertical axis illustrates a range of bending moments that corresponds to this range of head sizes. Head width 602 represents a minimum head width within the intended range of head widths, and 604 indicates a maximum head width. The bending moment shown at 606 corresponds to a determined moment that provides a suitably secure fit on a head of the minimum width in the range of intended head widths, and bending moment 608 represents a bending moment corresponding to a maximum head width within the range of intended head widths. Thus, sensor alignment on the wearable display device can be calibrated in a bent configuration corresponding to a bending moment resulting from a head width within the intended range is applied. An example of such a bending moment is shown at midpoint 610. Calibrating sensor alignment midway between the minimum and maximum intended head widths may accommodate both the minimum and maximum head widths with acceptable pointing error. In other examples, a bent configuration corresponding to a head width other than a midpoint width can be used for calibration, such as a minimum head width, a median head with, or other head width based on a statistical user population study.

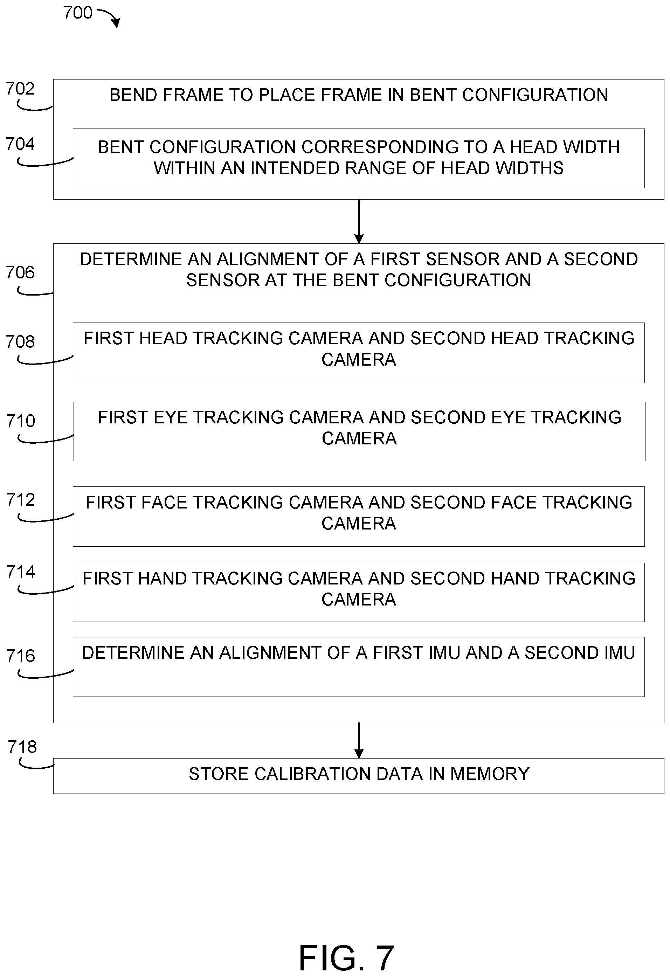

FIG. 7 illustrates a flow diagram depicting example method 700 for calibrating an alignment of a first sensor and a second sensor of a wearable display device. Method 700 may be performed on wearable display devices shown in FIG. 1, FIG. 2, FIG. 4, and/or any other suitable wearable display device. Method 700 comprises, at 702, applying bending a frame of a wearable display device to place the frame in a bent configuration. The bent configuration may be selected based upon a range of intended head widths, and application of the bent configuration causes the bending of a frame of the device, thereby changing an alignment of sensors on the frame compared to an unbent device state. In some examples, the bent configuration may correspond to a head width within an intended range of head widths, as indicated at 704.

Continuing, method 700 further comprises, at 706, determining an alignment of a first sensor and a second sensor at the bent configuration. The alignment determined may comprise one or more of an alignment of a first head tracking camera and a second head tracking camera at 708, an alignment of a first eye tracking camera and a second eye tracking camera at 710, an alignment of a first facing tracking camera and a second face tracking camera at 712, an alignment of a first hand tracking camera and a second hand tracking camera at 714, and an alignment of a first IMU and a second IMU at 716. Further, alignments between sensors of different types also may be determined, such as an alignment between a camera and an IMU. Method 700 further comprises, at 718, storing calibration data related to the alignment of the first and second sensors in memory on the wearable display device. The calibration data may comprise one or more datum related to the alignment of any suitable sensors.

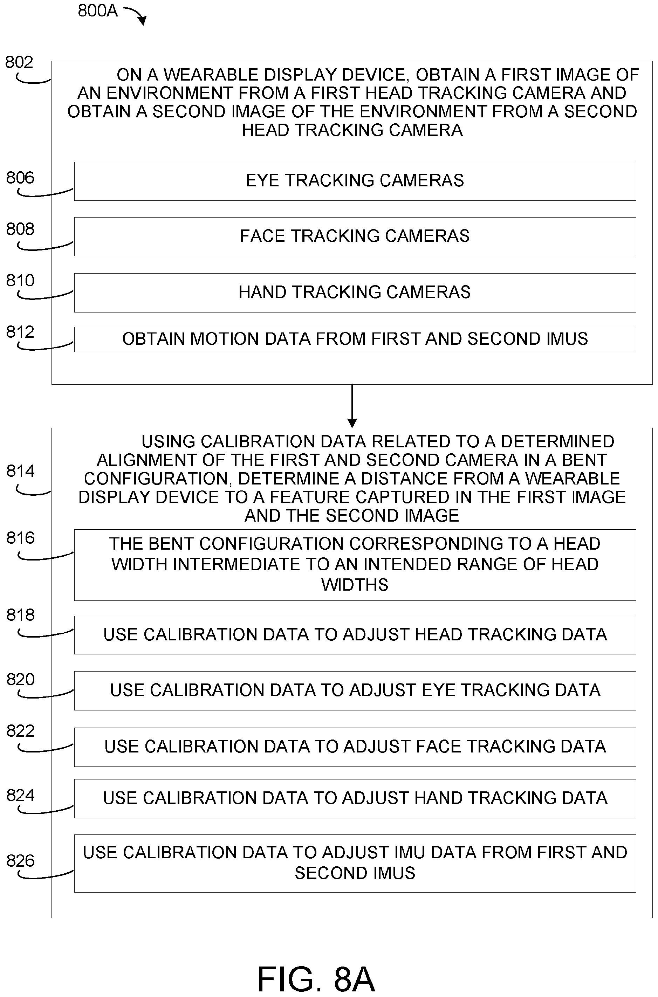

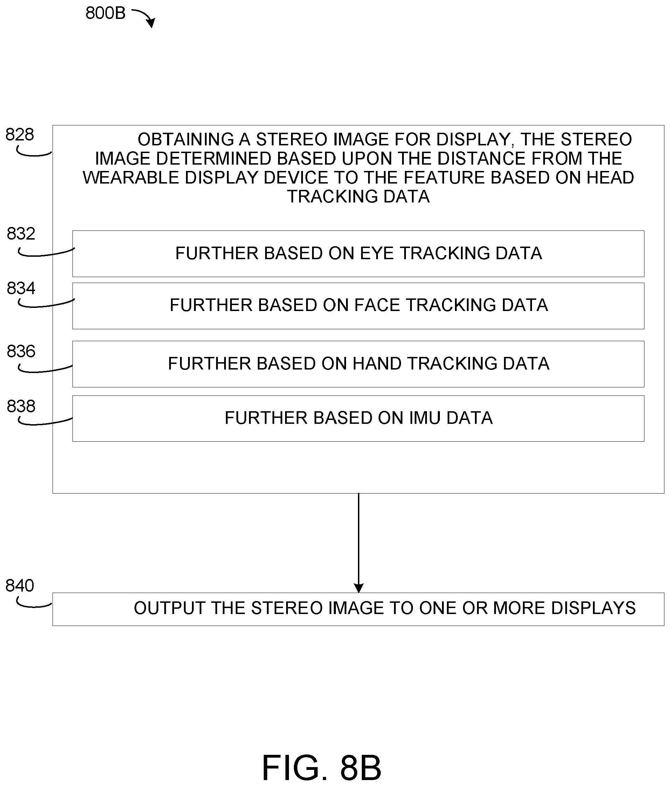

FIG. 8 shows a flow diagram depicting example method 800 for using calibration data to output a stereo image for display via a wearable display device. Method 800 may be performed on any suitable wearable display device, such as those shown in FIG. 1, FIG. 2, and/or FIG. 4 and described herein. Method 800 comprises, at 802, obtaining a first image from a first head tracking camera and obtaining a second image from a second head tracking camera. The device further may comprise eye tracking cameras 806, face tracking cameras 808, and face tracking cameras 810. Method 800 may further comprise, at 812, obtaining motion data from a first IMU and a second IMU.

At 814, method 800 further comprises using calibration data related to a determined alignment of the first and second cameras in a bent configuration to determining a distance from the wearable display device to a feature captured in the first and second images. The calibration data comprises calibrations of an alignment of the cameras when the device is in the bent configuration, and the bent configuration may correspond to a bent configuration that would result from the device being worn on a head. In some examples, at 816, the bent configuration corresponds to a head width within an intended range of head widths. In other examples, the bent configuration may correspond to a minimum head width in the intended range of head widths.

Method 800 further comprises adjusting image data from the head tracking cameras using the calibration data, as indicated at 818. Further, method 800 further may comprise one or more of using the calibration data to adjust eye tracking data at 820, using calibration data to adjust facing tracking data at 822, using calibration data to adjust hand tracking data at 824, or using calibration data to adjust IMU data from the first and second IMUs at 826. Any other suitable data from sensors on the wearable display device also may be adjusted using the calibration data. Using the calibration data acquired with a bent configuration applied to a frame to adjust the head tracking data may reduce a pointing error compared to adjusting the head tracking data using calibration data acquired without a bent configuration applied to the frame.

At 828, method 800 further comprises obtaining a stereo image for display, the stereo image determined based upon the distance from the wearable display device to the feature imaged based on the head tracking data. The stereo image may be rendered locally on the wearable display device, or rendered by and obtained from a remote service based upon data provided by the display device to the remote service (e.g. where the virtual content corresponds to an online game, game content may be rendered remotely by a remote game service and sent to the wearable display device based upon head tracking data and/or other suitable data provided to the remote game service). Additionally or alternatively, the stereo image displayed may be further based on one or more of eye tracking data at 832, face tracking data at 834, hand tracking data at 836, and IMU data at 838. At 840, method 800 further comprises outputting the stereo image to one or more displays on the wearable display device.

In some embodiments, the methods and processes described herein may be tied to a computing system of one or more computing devices. In particular, such methods and processes may be implemented as a computer-application program or service, an application-programming interface (API), a library, and/or other computer-program product.

FIG. 9 schematically shows a non-limiting embodiment of a computing system 900 that can enact one or more of the methods and processes described above. Computing system 900 is shown in simplified form. Computing system 900 may take the form of one or more personal computers, server computers, tablet computers, home-entertainment computers, network computing devices, gaming devices, mobile computing devices, mobile communication devices (e.g., smart phone), and/or other computing devices.

Computing system 900 includes a logic subsystem 902 and a storage subsystem 904. Computing system 900 may optionally include a display subsystem 906, input subsystem 908, communication subsystem 910, and/or other components not shown in FIG. 9.

Logic subsystem 902 includes one or more physical devices configured to execute instructions. For example, the logic machine may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic machine may include one or more processors configured to execute software instructions. Additionally or alternatively, the logic machine may include one or more hardware or firmware logic machines configured to execute hardware or firmware instructions. Processors of the logic machine may be single-core or multi-core, and the instructions executed thereon may be configured for sequential, parallel, and/or distributed processing. Individual components of the logic machine optionally may be distributed among two or more separate devices, which may be remotely located and/or configured for coordinated processing. Aspects of the logic machine may be virtualized and executed by remotely accessible, networked computing devices configured in a cloud-computing configuration.

Storage subsystem 904 includes one or more physical devices configured to hold instructions executable by the logic machine to implement the methods and processes described herein. When such methods and processes are implemented, the state of storage subsystem 904 may be transformed-e.g., to hold different data.

Storage subsystem 904 may include removable and/or built-in devices. Storage subsystem 904 may include optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage subsystem 904 may include volatile, nonvolatile, dynamic, static, read/write, read-only, random-access, sequentialaccess, location-addressable, file-addressable, and/or content-addressable devices.

It will be appreciated that storage subsystem 904 includes one or more physical devices. However, aspects of the instructions described herein alternatively may be propagated by a communication medium (e.g., an electromagnetic signal, an optical signal, etc.) that is not held by a physical device for a finite duration.

Aspects of logic subsystem 902 and storage subsystem 904 may be integrated together into one or more hardware-logic components. Such hardware-logic components may include fieldprogrammable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

It will be appreciated that a "service", as used herein, is an application program executable across multiple user sessions. A service may be available to one or more system components, programs, and/or other services. In some implementations, a service may run on one or more servercomputing devices.

When included, display subsystem 906 may be used to present a visual representation of data held by storage subsystem 904. This visual representation may take the form of a graphical user interface (GUI). As the herein described methods and processes change the data held by the storage machine, and thus transform the state of the storage machine, the state of display subsystem 906 may likewise be transformed to visually represent changes in the underlying data. Display subsystem 906 may include one or more display devices utilizing virtually any type of technology. Such display devices may be combined with logic subsystem 902 and/or storage subsystem 904 in a shared enclosure, or such display devices may be peripheral display devices. When included, input subsystem 908 may comprise or interface with one or more user-input devices such as a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 910 may be configured to communicatively couple computing system 900 with one or more other computing devices. Communication subsystem 910 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow computing system 900 to send and/or receive messages to and/or from other devices via a network such as the Internet.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

## Claims

1. A wearable display device (100; 200) comprising:
a frame (102; 402);
a first sensor (104, 114, 116, 120, 124; 204, 210, 216, 222, 228) and a second sensor (106, 118, 122, 126, 130; 206, 212, 218, 224, 230) spatially distributed on the frame (102; 402);
one or more displays (110, 111; 232, 234; 906) supported by the frame (102; 402);
a logic system (902); and
a storage system (904) comprising
calibration data related to a determined alignment of the first sensor (104, 114, 116, 120, 124; 204, 210, 216, 222, 228) and the second sensor (106, 118, 122, 126, 130; 206, 212, 218, 224, 230) with the frame (102; 402) in a bent configuration corresponding to an applied bending moment, and
instructions stored in the storage subsystem (904) executable by the logic system (902) to
obtain first sensor data from the first sensor (104, 114, 116, 120, 124; 204, 210, 216, 222, 228), and obtain second sensor data from the second sensor (106, 118, 122, 126, 130; 206, 212, 218, 224, 230),
using the calibration data, determine a distance from the wearable display device to a feature based at least upon the first sensor data and the second sensor data (814);
using the calibration data, adjust head tracking data from one or more of the first sensor (104, 114, 116, 120, 124; 204, 210, 216, 222, 228) and the second sensor (106, 118, 122, 126, 130; 206, 212, 218, 224, 230);
obtain a stereo image to display, the stereo image determined based upon the distance from the wearable display device to the feature (828) based on the head tracking data; and
output the stereo image via the one or more displays (840).

2. The device of claim 1, wherein the first sensor comprises a camera (104, 106, 116, 118, 120, 122, 124, 126; 204, 206, 210, 212, 216, 218, 222, 224) and the second sensor comprises an inertial measurement unit (IMU) (114, 130; 228, 230).

3. The device of claim 1, wherein the first sensor and the second sensor comprise head tracking cameras (104, 106; 204, 206).

4. The device of claim 3, further comprising a first display module (112; 232) positioned adjacent to the first camera (104, 204) for displaying a first image of the stereo image, and a second display module (128, 234) positioned adjacent to the second camera (106, 206) for displaying a second image of the stereo image.

5. The device of claim 4, further comprising an inertial measurement unit (IMU) system comprising a first IMU (114; 228) positioned adjacent to the first display module (112; 232) and a second IMU (130; 230) positioned adjacent to the second display module (128, 234), and
wherein the instructions are executable to adjust data from the one or more of the IMU system (226).

6. The device of claim 1, further comprising one or more of an eye tracking system (208) comprising a first eye tracking camera (116; 210) and a second eye tracking camera (118; 212), a face tracking system (214) comprising a first face tracking camera (120; 216) and a second face tracking camera (122; 218), or a hand tracking system (220) comprising a first hand tracking camera (124; 222) and a second hand tracking camera (126; 224), and
wherein the instructions are executable to adjust data from the one or more of the eye tracking system (208), the face tracking system (214), or the hand tracking system (220) using the calibration data.

7. The device of claim 1, wherein the bent configuration is based on an intended range of head widths (302, 304).

8. The device of claim 1, wherein the device is a head mounted display device.

9. A method of using calibration data to output a stereo image for display via a wearable display device, the method comprising:
bending a frame (102; 402) of the wearable display device to place the frame in a bent configuration to the frame;
determining a determined alignment of a first sensor (104, 114, 116, 120, 124; 204, 210, 216, 222, 228) and a second sensor (106, 118, 122, 126, 130; 206, 212, 218, 224, 230) distributed on the frame (102; 402) in the bent configuration corresponding to the applied bending moment;
storing calibration data in a memory (718) on the wearable display device based upon the determined alignment (706); and
using the calibration data, adjust head tracking data from the one or more of the first sensor (104, 114, 116, 120, 124; 204, 210, 216, 222, 228) and the second sensor (106, 118, 122, 126, 130; 206, 212, 218, 224, 230), wherein the method further includes:
obtaining a stereo image for display, the stereo image determined based upon a distance from the wearable display device to a feature based on the head tracking data; and
output the stereo image to one or more displays supported by the frame.

10. The method of claim 9, wherein the bent configuration is based upon an intended range of head widths (302, 304).

11. The method of claim 9, wherein the first sensor and the second sensor respectively comprise a first head tracking camera (104; 204) and a second head tracking camera (106; 206).

12. The method of claim 9, wherein the wearable display device additionally comprises a first eye tracking camera (116; 210) and a second eye tracking camera (118; 212), and wherein eye tracking data is adjusted using the calibration data (820).

13. The method of claim 9, wherein the wearable display device additionally comprises a first face tracking camera (120; 216) and a second face tracking camera (122; 218), and wherein face tracking data is adjusted using the calibration data (822).

14. The method of claim 9, wherein the wearable display device additionally comprises a first hand tracking camera (124; 222) and a second hand tracking camera (126; 224), and wherein hand tracking data is adjusted using the calibration data (824).

15. The method of claim 9, wherein the first sensor and the second sensor respectively comprise a first inertial measurement unit (IMU) (114; 228) and a second IMU (130; 230).

## Patentansprüche

1. Tragbare Anzeigevorrichtung (100; 200), aufweisend:
einen Rahmen (102; 402);
einen ersten Sensor (104, 114, 116, 120, 124; 204, 210, 216, 222, 228) und einen zweiten Sensor (106, 118, 122, 126, 130; 206, 212, 218, 224, 230), die räumlich auf dem Rahmen (102; 402) verteilt sind;
eine oder mehrere Anzeigen (110, 111; 232, 234; 906), die von dem Rahmen (102; 402) getragen werden;
ein Logiksystem (902); und
ein Speichersystem (904), aufweisend
Kalibrierungsdaten in Bezug auf eine bestimmte Ausrichtung des ersten Sensors (104, 114, 116, 120, 124; 204, 210, 216, 222, 228) und des zweiten Sensors (106, 118, 122, 126, 130; 206, 212, 218, 224, 230) mit dem Rahmen (102; 402) in einer gebogenen Konfiguration, die einem angelegten Biegemoment entspricht, und
Instruktionen, die in dem Speichersubsystem (904) gespeichert sind und von dem Logiksystem (902) ausführbar sind, um
erste Sensordaten von dem ersten Sensor (104, 114, 116, 120, 124; 204, 210, 216, 222, 228) zu erhalten und zweite Sensordaten von dem zweiten Sensor (106, 118, 122, 126, 130; 206, 212, 218, 224, 230) zu erhalten,
unter Verwendung der Kalibrierungsdaten einen Abstand von der tragbaren Anzeigevorrichtung zu einem Merkmal basierend zumindest auf den ersten Sensordaten und den zweiten Sensordaten (814) zu bestimmen;
unter Verwendung der Kalibrierungsdaten Kopfverfolgungsdaten von einem oder mehreren von dem ersten Sensor (104, 114, 116, 120, 124; 204, 210, 216, 222, 228) und dem zweiten Sensor (106, 118, 122, 126, 130; 206, 212, 218, 224, 230) anzupassen;
ein Stereobild zur Anzeige zu erhalten, wobei das Stereobild basierend auf dem Abstand von der tragbaren Anzeigevorrichtung zu dem Merkmal (828) basierend auf den Kopfverfolgungsdaten bestimmt wird; und
das Stereobild über die eine oder die mehreren Anzeigen (840) auszugeben.

2. Vorrichtung nach Anspruch 1, wobei der erste Sensor eine Kamera (104, 106, 116, 118, 120, 122, 124, 126; 204, 206, 210, 212, 216, 218, 222, 224) aufweist und der zweite Sensor eine Trägheitsmesseinheit (IMU) (114, 130; 228, 230) aufweist.

3. Vorrichtung nach Anspruch 1, wobei der erste Sensor und der zweite Sensor Kopfverfolgungskameras (104, 106; 204, 206) aufweisen.

4. Vorrichtung nach Anspruch 3, ferner aufweisend ein erstes Anzeigemodul (112; 232), das benachbart zu der ersten Kamera (104, 204) zum Anzeigen eines ersten Bildes des Stereobildes positioniert ist, und ein zweites Anzeigemodul (128, 234), das benachbart zu der zweiten Kamera (106, 206) zum Anzeigen eines zweiten Bildes des Stereobildes positioniert ist.

5. Vorrichtung nach Anspruch 4, ferner aufweisend ein Trägheitsmesseinheit (TME)-System, aufweisend eine erste TME (114; 228), die benachbart zu dem ersten Anzeigemodul (112; 232) positioniert ist, und eine zweite TME (130; 230), die benachbart zu dem zweiten Anzeigemodul (128, 234) positioniert ist, und
wobei die Instruktionen ausführbar sind, um Daten von dem einen oder den mehreren von dem TME-System (226) anzupassen.

6. Vorrichtung nach Anspruch 1, ferner aufweisend eines oder mehrere von einem Augenverfolgungssystem (208), aufweisend eine erste Augenverfolgungskamera (116; 210) und eine zweite Augenverfolgungskamera (118; 212), einem Gesichtsverfolgungssystem (214), aufweisend eine erste Gesichtsverfolgungskamera (120; 216) und eine zweite Gesichtsverfolgungskamera (122; 218), oder einem Handverfolgungssystem (220), aufweisend eine erste Handverfolgungskamera (124; 222) und eine zweite Handverfolgungskamera (126; 224), und
wobei die Instruktionen ausführbar sind, um Daten von dem einen oder den mehreren von dem Augenverfolgungssystem (208), dem Gesichtsverfolgungssystem (214) oder dem Handverfolgungssystem (220) unter Verwendung der Kalibrierungsdaten anzupassen.

7. Vorrichtung nach Anspruch 1, wobei die gebogene Konfiguration auf einem beabsichtigten Bereich von Kopfbreiten (302, 304) basiert.

8. Vorrichtung nach Anspruch 1, wobei die Vorrichtung eine am Kopf befestigte Anzeigevorrichtung ist.

9. Verfahren zum Verwenden von Kalibrierungsdaten, um ein Stereobild zur Anzeige über eine tragbare Anzeigevorrichtung auszugeben, wobei das Verfahren aufweist:
Biegen eines Rahmens (102; 402) der tragbaren Anzeigevorrichtung, um den Rahmen in eine gebogene Konfiguration zu dem Rahmen zu bringen;
Bestimmen einer bestimmten Ausrichtung eines ersten Sensors (104, 114, 116, 120, 124; 204, 210, 216, 222, 228) und eines zweiten Sensors (106, 118, 122, 126, 130; 206, 212, 218, 224, 230), die auf dem Rahmen (102; 402) in der gebogenen Konfiguration verteilt sind, die dem angelegten Biegemoment entspricht;
Speichern von Kalibrierungsdaten in einem Speicher (718) auf der tragbaren Anzeigevorrichtung basierend auf der bestimmten Ausrichtung (706); und
unter Verwendung der Kalibrierungsdaten, Anpassen von Kopfverfolgungsdaten von dem einen oder den mehreren von dem ersten Sensor (104, 114, 116, 120, 124; 204, 210, 216, 222, 228) und dem zweiten Sensor (106, 118, 122, 126, 130; 206, 212, 218, 224, 230), wobei das Verfahren ferner aufweist:
Erhalten eines Stereobildes zur Anzeige, wobei das Stereobild basierend auf einem Abstand von der tragbaren Anzeigevorrichtung zu einem Merkmal basierend auf den Kopfverfolgungsdaten bestimmt wird; und
Ausgeben des Stereobildes an eine oder mehrere Anzeigen, die von dem Rahmen getragen werden.

10. Verfahren nach Anspruch 9, wobei die gebogene Konfiguration auf einem beabsichtigten Bereich von Kopfbreiten (302, 304) basiert.

11. Verfahren nach Anspruch 9, wobei der erste Sensor und der zweite Sensor jeweils eine erste Kopfverfolgungskamera (104; 204) und eine zweite Kopfverfolgungskamera (106; 206) aufweisen.

12. Verfahren nach Anspruch 9, wobei die tragbare Anzeigevorrichtung zusätzlich eine erste Augenverfolgungskamera (116; 210) und eine zweite Augenverfolgungskamera (118; 212) aufweist, und wobei die Augenverfolgungsdaten unter Verwendung der Kalibrierungsdaten (820) angepasst werden.

13. Verfahren nach Anspruch 9, wobei die tragbare Anzeigevorrichtung zusätzlich eine erste Gesichtsverfolgungskamera (120; 216) und eine zweite Gesichtsverfolgungskamera (122; 218) aufweist, und wobei die Gesichtsverfolgungsdaten unter Verwendung der Kalibrierungsdaten (822) angepasst werden.

14. Verfahren nach Anspruch 9, wobei die tragbare Anzeigevorrichtung zusätzlich eine erste Handverfolgungskamera (124; 222) und eine zweite Handverfolgungskamera (126; 224) aufweist, und wobei die Handverfolgungsdaten unter Verwendung der Kalibrierungsdaten (824) angepasst werden.

15. Verfahren nach Anspruch 9, wobei der erste Sensor und der zweite Sensor jeweils eine erste Trägheitsmesseinheit (TME) (114; 228) und eine zweite TME (130; 230) aufweisen.

## Revendications

1. Dispositif d'affichage portable (100 ; 200), comprenant :
une monture (102 ; 402) ;
un premier capteur (104, 114, 116, 120, 124 ; 204, 210, 216, 222, 228) et un second capteur (106, 118, 122, 126, 130 ; 206, 212, 218, 224, 230) répartis spatialement sur la monture (102 ; 402) ;
un ou plusieurs écrans (110, 111 ; 232, 234 ; 906) supportés par la monture (102 ; 402) ; un système logique (902) ; et
un système de stockage (904) comprenant
des données d'étalonnage relatives à un alignement déterminé du premier capteur (104, 114, 116, 120, 124 ; 204, 210, 216, 222, 228) et du second capteur (106, 118, 122, 126, 130 ; 206, 212, 218, 224, 230) avec la monture (102 ; 402) dans une configuration fléchie correspondant à un moment de flexion appliqué, et
des instructions stockées dans le sous-système de stockage (904) exécutables par le système logique (902) pour
obtenir des premières données de capteur à partir du premier capteur (104, 114, 116, 120, 124 ; 204, 210, 216, 222, 228), et obtenir des secondes données de capteur à partir du second capteur (106, 118, 122, 126, 130 ; 206, 212, 218, 224, 230),
en utilisant les données d'étalonnage, déterminer une distance du dispositif d'affichage portable à une caractéristique sur la base au moins des premières données de capteur et des secondes données de capteur (814) ;
en utilisant les données d'étalonnage, ajuster les données de suivi de la tête provenant d'un ou plusieurs du premier capteur (104, 114, 116, 120, 124 ; 204, 210, 216, 222, 228) et du second capteur (106, 118, 122, 126, 130 ; 206, 212, 218, 224, 230) ;
obtenir une image stéréoscopique à afficher, l'image stéréoscopique étant déterminée sur la base de la distance du dispositif d'affichage portable à la caractéristique (828) sur la base des données de suivi de la tête ; et
délivrer l'image stéréoscopique via les un ou plusieurs écrans (840).

2. Dispositif selon la revendication 1, dans lequel le premier capteur comprend une caméra (104, 106, 116, 118, 120, 122, 124, 126 ; 204, 206, 210, 212, 216, 218, 222, 224) et le second capteur comprend une unité de mesure inertielle (IMU) (114, 130 ; 228, 230).

3. Dispositif selon la revendication 1, dans lequel le premier capteur et le second capteur comprennent des caméras de suivi de la tête (104, 106 ; 204, 206).

4. Dispositif selon la revendication 3, comprenant en outre un premier module d'affichage (112 ; 232) positionné à proximité de la première caméra (104, 204) pour afficher une première image de l'image stéréoscopique, et un second module d'affichage (128, 234) positionné à proximité de la seconde caméra (106, 206) pour afficher une seconde image de l'image stéréoscopique.

5. Dispositif selon la revendication 4, comprenant en outre un système d'unités de mesure inertielle (IMU) comprenant une première IMU (114 ; 228) positionnée à proximité du premier module d'affichage (112 ; 232) et une seconde IMU (130 ; 230) positionnée à proximité du second module d'affichage (128, 234), et
dans lequel les instructions sont exécutables pour ajuster les données provenant des une ou plusieurs du système d'IMU (226).

6. Dispositif selon la revendication 1, comprenant en outre un ou plusieurs d'un système de suivi du regard (208) comprenant une première caméra de suivi du regard (116 ; 210) et une seconde caméra de suivi du regard (118 ; 212), d'un système de suivi du visage (214) comprenant une première caméra de suivi du visage (120 ; 216) et une seconde caméra de suivi du visage (122 ; 218), ou d'un système de suivi de la main (220) comprenant une première caméra de suivi de la main (124 ; 222) et une seconde caméra de suivi de la main (126 ; 224), et
dans lequel les instructions sont exécutables pour ajuster les données provenant des un ou plusieurs des systèmes de suivi du regard (208), du système de suivi du visage (214) ou du système de suivi de la main (220) en utilisant les données d'étalonnage.

7. Dispositif selon la revendication 1, dans lequel la configuration fléchie est basée sur une plage prévue de largeurs de tête (302, 304).

8. Dispositif selon la revendication 1, dans lequel le dispositif est un dispositif d'affichage monté sur la tête.

9. Méthode d'utilisation de données d'étalonnage pour délivrer une image stéréoscopique pour affichage via un dispositif d'affichage portable, la méthode comprenant :
la flexion d'une monture (102 ; 402) du dispositif d'affichage portable pour placer la monture dans une configuration fléchie par rapport à la monture ;
la détermination d'un alignement déterminé d'un premier capteur (104, 114, 116, 120, 124 ; 204, 210, 216, 222, 228) et d'un second capteur (106, 118, 122, 126, 130 ; 206, 212, 218, 224, 230) répartis sur la monture (102 ; 402) dans la configuration fléchie correspondant au moment de flexion appliqué ;
le stockage de données d'étalonnage dans une mémoire (718) sur le dispositif d'affichage portable sur la base de l'alignement (706) déterminé ; et
en utilisant les données d'étalonnage, l'ajustement de données de suivi de la tête provenant des un ou plusieurs du premier capteur (104, 114, 116, 120, 124 ; 204, 210, 216, 222, 228) et du second capteur (106, 118, 122, 126, 130 ; 206, 212, 218, 224, 230), dans laquelle la méthode comporte en outre :
l'obtention d'une image stéréoscopique pour affichage, l'image stéréoscopique étant déterminée sur la base d'une distance du dispositif d'affichage portable à une caractéristique sur la base des données de suivi de la tête ; et
la délivrance de l'image stéréoscopique sur un ou plusieurs écrans supportés par la monture.

10. Méthode selon la revendication 9, dans laquelle la configuration fléchie est basée sur une plage prévue de largeurs de la tête (302, 304).

11. Méthode selon la revendication 9, dans laquelle le premier capteur et le second capteur comprennent respectivement une première caméra de suivi de la tête (104 ; 204) et une seconde caméra de suivi de la tête (106 ; 206).

12. Méthode selon la revendication 9, dans laquelle le dispositif d'affichage portable comprend en outre une première caméra de suivi du regard (116 ; 210) et une seconde caméra de suivi du regard (118 ; 212), et dans laquelle les données de suivi du regard sont ajustées en utilisant les données d'étalonnage (820).

13. Méthode selon la revendication 9, dans laquelle le dispositif d'affichage portable comprend en outre une première caméra de suivi du visage (120 ; 216) et une seconde caméra de suivi du visage (122 ; 218) et dans laquelle les données de suivi du visage sont ajustées en utilisant les données d'étalonnage (822).

14. Méthode selon la revendication 9, dans laquelle le dispositif d'affichage portable comprend en outre une première caméra de suivi de la main (124 ; 222) et une seconde caméra de suivi de la main (126 ; 224) et dans laquelle les données de suivi de la main sont ajustées en utilisant les données d'étalonnage (824).

15. Méthode selon la revendication 9, dans laquelle le premier capteur et le second capteur comprennent respectivement une première unité de mesure inertielle (IMU) (114 ; 228) et une seconde IMU (130 ; 230).
